# EUROPEAN PATENT APPLICATION

(11) **EP 4 800 807 A1**
(43) Date of publication of application: **02.09.2026**
(21) Application number: 25160947.5
(22) Date of filing: 28.02.2025
(51) Int. Cl.: H01M 10/625, H01M 10/653, H01M 10/6555, H01M 10/6557, F28F 3/12, H01M 10/613, H01M 10/6567, H01M 50/124

(54) **ELECTRICALLY INSULATED DEVICE FOR CONTROLLING THE TEMPERATURE OF A BATTERY PACK**

(71) Applicant: Miba Battery Systems GmbH, 4190 Bad Leonfelden (AT)
(72) Inventor: PÖHN, Franz, 4643 Pettenbach (AT)
(74) Representative: Burger, Hannes Alfred

(57) **Abstract**

The invention relates to a device (1) for cooling or controlling the temperature of a battery pack comprising a first flexible multilayer film (3a) and a second flexible multilayer film (3b), wherein the device (1) also comprises at last one electrical insulation film (8, 8a, 8b) covering at least on section of the edge (ED) of the device (1). Said device (1) having an efficient electrical insulation between the device and the batteries when placed in a battery pack.

## Description

### Field of the Invention

The present invention relates to a device for cooling or controlling the temperature of a battery pack comprising a first flexible multilayer film and a second flexible multilayer film and an electrical insulation film. It also relates to a battery pack comprising said device and to a vehicle comprising said battery pack or said device.

### Background

Battery packs or batteries are typically provided in modules of cells or batteries arranged in a matrix. These modules support the batteries in the desired arrangement and the batteries are normally densely packed. As the batteries are densely packed, they have limited heat dissipation pathways to the environment. This causes the overall temperature of the cell pack to rise and heat the individual cells to a temperature outside of the preferred operating temperature range.

On the other hand, the individual cells cannot operate effectively if they are too cold. Therefore, for devices that operate at low temperatures it is necessary to heat the cell pack to raise the temperature of each cell to its preferred operating temperature range.

Nowadays, there are devices for cooling or controlling the temperature of the battery packs to help the effective operation of the batteries. US11581597B2 discloses a flexible cooling system for rechargeable batteries that improves their performance and allows for better temperature control. The system comprises a device for cooling battery packs which uses flexible films that can be easily inserted between the cells and the housing of the battery. The flexible films can be connected to each other to create a coolant channel. The cooling device can be designed to be hose-shaped, which simplifies its production and improves its cooling performance. The flexible films comprise a metal layer that improves the efficiency of the cooling device. Overall, the cooling device provides a more efficient and stable way to cool or control the temperature of rechargeable battery packs.

This type of flexible cooling device is generally made of a multilayer composite film material comprising a metal layer. The metal layer is basically in the core of the structure and is therefore covered by one polymer layer. The polymer layer provides some electrical insulation to the metal layer which depends on the type of polymer material and the thickness of said polymer layer. However, it can happen that the thickness of the polymer layer is not enough to completely electrically insulate the metal layer or that the polymer layer does not have proper electrical insulation properties. Additionally, the metal layer in the flexible cooling device is exposed at the cut edges created when cutting or punching during the preparation/production of said flexible cooling device. The flexible cooling device is therefore electrically conductive on the outer contour/perimeter or at all punched out areas creating a risk for potential short circuit when placed close to the batteries or when in contact with the batteries.

In order to prevent a short circuit between the batteries and the flexible cooling device, as the batteries have different electrical potentials, the batteries are usually electrically insulated. Another solution to prevent a short circuit is that the open cutting edges of the flexible cooling device are covered with a part of the battery holder having a suitable shape to cover said cutting edges. However, in both cases there is always the risk that unwanted short-circuit current flows through the air and/or through creepage because the batteries are usually only insulated at the jacket and not at the poles. Therefore, even if the cut edges are covered by the cell holder part, it is usually not possible to ensure an "airtight shield" of the non-insulated edge, section or cutting of the flexible cooling device. This means that a flow of current through the air or along the surface of the insulation material (creepage) cannot be ruled out.

Therefore, there is still a need for a flexible device for cooling or controlling the temperature of battery packs with improved electrical insulation of the metal layer and cut edges that prevents the risk of short circuit between the batteries and the metal layer of the flexible device for cooling or controlling the temperature of battery packs.

The present inventors have surprisingly found that with using a device (1) for cooling or controlling the temperature of a battery pack as in claim 1 of the present invention, improved electrical insulation of the flexible cooling system is achieved.

The inventive device (1) for cooling or controlling the temperature of a battery pack is very advantageous because, as it is electrically insulated, no additional space for clearance distance or creepage distance is needed. This allows larger cooling contact area between the device (1) and the batteries in the battery pack. Additionally, the device (1) can then be used on batteries which are not electrically insulated. Another advantage of the inventive device (1) is that the resistance to damage from unwanted particles or parts is increased as the electrical insulation film/material also works as an additional mechanical protective layer.

According to a specific embodiment of the present invention, the device (1) for cooling or controlling the temperature of a battery pack comprises a first flexible multilayer film (3a) and a second flexible multilayer film (3b). The device (1) also comprises at last one electrical insulation film (8, 8a, 8b, 8a-1, 8a-2, 8b-1, 8b-2, PF) covering at least one section of the edge (ED) of the device (1), so that the device (1) is electrically insulated by said at least one electrical insulation film (8, 8a, 8b, 8a-1, 8a-2, 8b-1, 8b-2, PF).

The inventive device (1) can be any flexible device for cooling or controlling the temperature of a battery pack.

According to a further embodiment the present invention provides a device (1), wherein:
a) the first flexible multilayer film (3a) comprises a first polymer layer (4a), a second polymer layer (5a) and a metal layer (6a) arranged in between the first polymer layer (4a) and the second polymer layer (5a),
b) the second flexible multilayer film (3b) comprises a first polymer layer (4b), a second polymer layer (5b) and a metal layer (6b) arranged in between the first polymer layer (4b) and the second polymer layer (5b),
wherein the first flexible multilayer film (3a) and the second flexible multilayer film (3b) are partially joined to each another in joining regions (7) where their respective second polymer layer (5a) and (5b) have contact so that at least one conduit (10), where a cooling medium can flow, is formed between the joining regions (7),
wherein the device (1) also comprises one electrical insulation film (8a) covering at least one section (S3a) of the first flexible multilayer film (3a) and one electrical insulation film (8b) covering at least one section (S3b) of the second flexible multilayer film (3b), both electrical insulation films (8a) and (8b) being placed so that they face each other and then being connected on their edges (ED8a) and (ED8b) so that they cover the edge (ED) of the device (1) in the at least one sections (S3a) and (S3b) so that the device (1) is electrically insulated by said electrical insulation films (8a, 8b).

According to another example of this embodiment the present invention provides a device (1) wherein the electrical insulation film (8a) covers all the surface of the first flexible multilayer film (3a) and the electrical insulation film (8b) covers all the surface of the second flexible multilayer film (3b), both electrical insulation films (8a) and (8b) being placed so that they face each other and then are connected on their edges (ED8a) and (ED8b) so that they cover the edge (ED) of all the perimeter (P) of the device (1), so that the device (1) is electrically insulated by said electrical insulation films (8a, 8b).

According to a further embodiment the present invention provides a device (1), wherein:
a) the first flexible multilayer film (3a) comprises a first polymer layer (4a), a second polymer layer (5a) and a metal layer (6a) arranged in between the first polymer layer (4a) and the second polymer layer (5a),
b) the second flexible multilayer film (3b) comprises a first polymer layer (4b), a second polymer layer (5b) and a metal layer (6b) arranged in between the first polymer layer (4b) and the second polymer layer (5b),
wherein the first flexible multilayer film (3a) and the second flexible multilayer film (3b) are partially joined to each another in joining regions (7) where their respective second polymer layer (5a) and (5b) have contact so that at least one conduit (10), where a cooling medium can flow, is formed between the joining regions (7),
wherein the device (1) also comprises at least one electrical insulation film (8) which is connected to both, the external surface of the first flexible multilayer film (3a) and the external surface of the second flexible multilayer film (3b) so that it covers one section (S1) of the edge (ED) of the device (1), so that the device (1) is electrically insulated on this section (S1) of the edge (ED) covered by the electrical insulation film (8).

According to another example of this embodiment the present invention provides a device (1) wherein the at least one electrical insulation film (8) covers all the edge (ED) of all the perimeter (P) of the device (1).

According to another example of this embodiment the present invention provides a device (1) comprising:
a) a first electrical insulation film (8c) which is connected to the external surface and to the internal surface of the first flexible multilayer film (3a), so that it covers a section (S3a') of the edge (ED3a) of the first flexible multilayer film (3a), electrically insulating said edge (ED3a),
   and
b) a second electrical insulation film (8d) which is connected to the external surface and to the internal surface of the second flexible multilayer film (3b), so that it covers a section (S3b') of the edge (ED3b) of the second flexible multilayer film (3b), electrically insulating said edge (ED3b);
so that, when both the first flexible multilayer film (3a) and the second flexible multilayer film (3b) are partially joined to each another in the joining regions (7) to form the device (1) according to the invention, said device (1) is electrically insulated by the films (8c, 8d).

According to another example of this embodiment the present invention provides a device (1) wherein, the at least one electrical insulation film (8) is a pouch-type film (PF) in which the device (1) is introduced so that the pouch-type film (PF) covers the device (1) and the edges (ED) of the perimeter (P) of the device (1).

According to a further embodiment of the present invention, the at least one electrical insulation film (8, 8a, 8b) is made of or comprises a layer made of an electrical insulation polymer material. Examples of electrical insulation polymer material are polypropylene, polyethylene, polyethylene terephthalate or mixtures thereof.

According to a further embodiment of the present invention, the electrical insulation film (8, 8a, 8b) is a multilayer film comprising an internal electrical insulation polymer material layer (9a) and an external electrical insulation polymer material layer (9b) arranged one on the top of the other, wherein, the electrical insulation polymer material of the layer (9a) differs from the electrical insulation polymer material of the layer (9b).

According to a further embodiment of the present invention:
a) the electrical insulation polymer material of the layer (9a) is a polypropylene material, a polyethylene material, or a mixture thereof, and
b) the electrical insulation polymer material of the layer (9b) is a polyethylene terephthalate material.

The electrical insulation polymer material of the layer (9b) being a polyethylene terephthalate material is advantageous because it provides high strength, abrasion resistance and electrical insulation properties to the electrical insulation film (8, 8a, 8b).

The electrical insulation polymer material of the layer (9a) being a polypropylene material, a polyethylene material, or a mixture thereof, is advantageous because it provides flexibility, softness, good thermal conductivity and electrical insulation properties to the electrical insulation film (8, 8a, 8b).

The electrical insulation film (8, 8a, 8b) can be a multilayer film comprising more than two layers, wherein said layers can comprise one or more of the layers (9a) or (9b). Therefore, several combination of layers comprised in the electrical insulation film (8, 8a, 8b) are possible.

According to a further embodiment of the present invention, the metal layer (6a, 6b) is made of copper, copper alloy, aluminum or aluminum alloy.

According to a further embodiment of the present invention, the device (1) according to the invention comprises fittings for the inlet and/or outlet of the cooling medium flowing in the at least one conduit (10) of the device (1). Generally, the fittings are made of plastic or metal.

According to a further embodiment of the present invention, the device (1) according to the invention has one or more conduits (10), formed between the joining regions (7) where the second polymer layer (5a) and (5b) have contact, where a cooling medium can flow.

A cooling medium can be any type of liquid or gas that is capable of exchanging heat to or from a surface. This means that the cooling medium can cool the surface or heat the surface, depending of the specific application of the heat controlling device (1). The cooling medium can be a liquid or a gas or a mixture thereof. Examples of cooling medium are glycol- based fluid, like for example ethylene glycol; water, air, oil, or mixture of ethylene glycol and water.

The present invention also relates to a battery pack comprising the device (1) according to the invention. Said battery pack can also comprise several batteries for storing electrical energy and the device (1) according to the invention placed in between the batteries.

The present invention also relates to a vehicle comprising the device (1) according to the invention.

The present invention also relates to a vehicle comprising the battery pack according to the invention.

For a better understanding of the invention, it is explained in more detail with the aid of the following figures in a non-limiting manner. In each case, a simplified, exemplary, schematic representation is shown:
Figure 1 shows a first example of the device (1) according to the invention.
Figure 2 shows a second example of the device (1) according to the invention.
Figure 3 shows a third example of the device (1) according to the invention.
Figure 4 shows an example of the device (1) according to the invention together with the batteries.
Figure 5 shows a battery pack comprising a device (1) according to the invention.

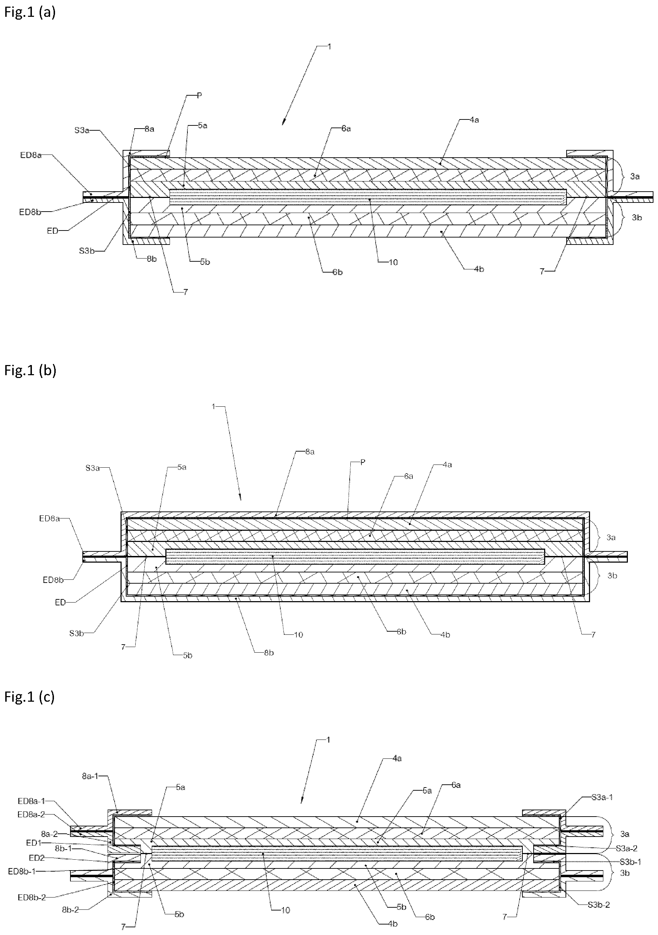

In figure 1a it is shown a cross-section view of an exemplary device (1) according to the invention.

In this example the device (1) comprises:
a) a first flexible multilayer film (3a) comprising a first polymer layer (4a), a second polymer layer (5a) and a metal layer (6a) arranged in between the first polymer layer (4a) and the second polymer layer (5a),
b) a second flexible multilayer film (3b) comprising a first polymer layer (4b), a second polymer layer (5b) and a metal layer (6b) arranged in between the first polymer layer (4b) and the second polymer layer (5b),

According to this example, the first flexible multilayer film (3a) and the second flexible multilayer film (3b) are partially joined to each another in joining regions (7) where their respective second polymer layer (5a) and (5b) have contact so that one conduit (10), where a cooling medium can flow, is formed between the joining regions (7). However, in further examples of this embodiment the device (1) can have more than one conduit (10) where a cooling medium can flow.

According to this example, the device (1) also comprises one electrical insulation film (8a) covering the section (S3a) of the first flexible multilayer film (3a) and one electrical insulation film (8b) covering the section (S3b) of the second flexible multilayer film (3b). Both electrical insulation films (8a) and (8b) are placed so that they face each other, so that when their edges (ED8a) and (ED8b) are connected, they cover the edge (ED) of the device (1) in the sections (S3a) and (S3b) so that the device (1) is electrically insulated by said electrical insulation films (8a, 8b).

Generally, for the electrical insulation films (8a) and (8b) to be able to cover the edge (ED) of the device (1) when connected each other, the edges (ED8a) and (ED8b) are placed so that they extend beyond the perimeter (P) of the device (1), so that when said edges (ED8a) and (ED8b) are connected, they cover the edge (ED) of the device (1).

Figure 1b shows a cross-section view of a further exemplary device (1) according to the invention.

In this second example, the electrical insulation film (8a) covers all the surface of the first flexible multilayer film (3a) and the electrical insulation film (8b) covers all the surface of the second flexible multilayer film (3b). Both electrical insulation films (8a) and (8b) are placed so that they face each other, so that when their edges (ED8a) and (ED8b) are connected, they cover the edge (ED) of all the perimeter (P) of the device (1). In this way the device (1) is electrically insulated by said electrical insulation films (8a, 8b) in all its perimeter (P). In the case the device has cut or punch out areas or sections on the surface of the first flexible multilayer film (3a) and/or on the surface of the second flexible multilayer film (3b) said cut or punch out areas or sections are then electrically insulated by the electrical insulation film (8a)and the electrical insulation film (8b) respectively.

Figure 1c shows a cross/section view of a further exemplary device (1) according to the invention.

In this third example, and in a step previous to the step of partially join the first flexible multilayer film (3a) and the second flexible multilayer film (3b) to each another in joining regions (7) where their respective second polymer layer (5a) and (5b) have contact so that one conduit (10), where a cooling medium can flow, is formed between the joining regions (7):
a) the electrical insulation film (8a-1) is applied/connected on/to the external surface on the first flexible multilayer film (3a) so that it covers the external section (S3a-1) of the first flexible multilayer film (3a)
   and the electrical insulation film (8a-2) is applied/connected on/to a section of the internal surface on the first flexible multilayer film (3a) so that it covers the internal section (S3a-2) of the first flexible multilayer film (3a),
   both electrical insulation films (8a-1) and (8a-2) are then placed so that they face each other, so that when their edges (ED8a-1) and (ED8a-2) are connected, they cover the edge (ED-1) in the sections (S3a-1) and (S3a-2) of the first flexible multilayer film (3a).
b) the electrical insulation film (8b-1) is applied/connected on/to the external surface on the second flexible multilayer film (3b) so that it covers the external section (S3b-1) of the second flexible multilayer film (3b)
   and the electrical insulation film (8b-2) is applied/connected on/to a section of the internal surface on the second flexible multilayer film (3b) so that it covers the internal section (S3b-2) of the second flexible multilayer film (3b),
   both electrical insulation films (8b-1) and (8b-2) are then placed so that they face each other, so that when their edges (ED8b-1) and (ED8b-2) are connected, they cover the edge (ED-2) in the sections (S3b-1) and (S3b-2) of the second flexible multilayer film (3b).

So that, when both the first flexible multilayer film (3a) and the second flexible multilayer film (3b) are partially joined to each another in the joining regions (7) to form the device (1) according to the invention, said device (1) is electrically insulated by the films (8a-1), (8a-2), (8b-1) and (8b-2).

The electrical insulation films (8a, 8b, 8a-1, 8a-2, 8b-1, 8b-2) are generally connected to the respective surfaces of the first flexible multilayer film (3a) and second flexible multilayer film (3b) and connected one to the other (depending of the specific case) by means of an adhesive or by welding, coating, painting, overmolding or tapering process or by melting said electrical insulation films (8a, 8b, 8a-1, 8a-2, 8b-1, 8b-2) on the respective surfaces of the first multilayer film (3a) and second multilayer film (3b) and to each other. However, other processes of connection/application of the electrical insulation films (8a, 8b, 8a-1, 8a-2, 8b-1, 8b-2) can be used.

An adhesive can be a hot-melt adhesive, a UV-curing adhesive or any other adhesive capable of connecting the films.

It can also be possible, as for example in the case shown in Figure 1b, that the electrical insulation film (8a) covering all the surface of the first flexible multilayer film (3a) and the electrical insulation film (8b) covering all the surface of the second flexible multilayer film (3b) are not connected to their respective surfaces of the first flexible multilayer film (3a) and the second flexible multilayer film (3b), but only connected each other on their edges (ED8a) and (ED8b), covering the edge (ED) of all the perimeter (P) of the device (1) and therefore electrically insulating the edges of all the perimeter (P) of the device (1). In this example, the electrical insulation films (8a) and (8b) can be connected one to the other by means of an adhesive or by welding, coating, painting, overmolding or tapering process. However, other processes of connection/application of the electrical insulation films (8a, 8b) can be used, for example, by attaching or fastening or clamping them with the aid of peripheral equipment, like for example, a cell holder or a frame, like for example a plastic frame.

An adhesive can be a hot-melt adhesive, a UV-curing adhesive or any other adhesive capable of connecting the films.

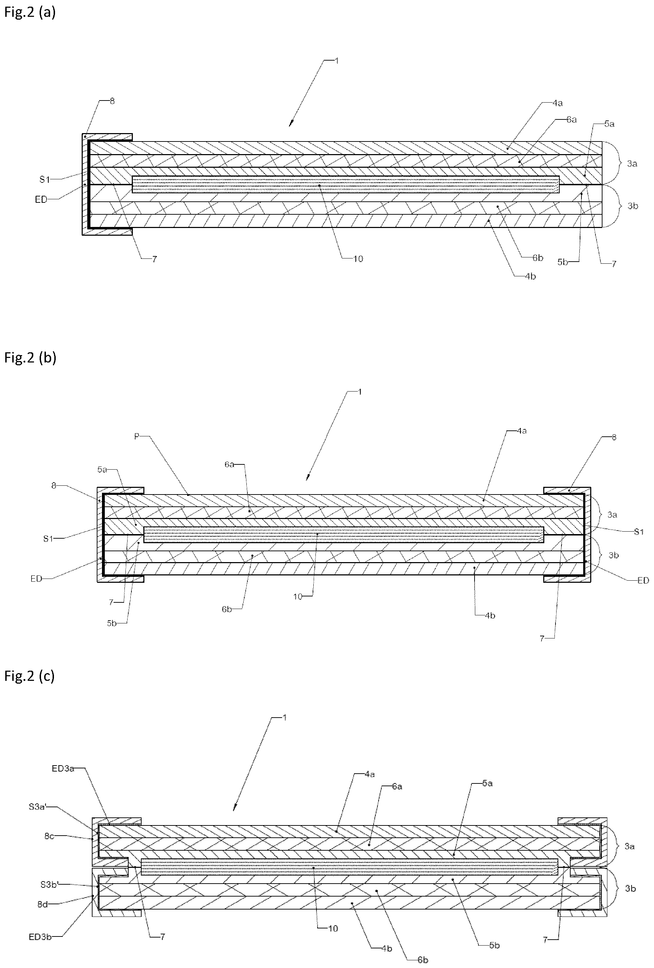

Figure 2 shows a second example of the device (1) according to the invention.

Figure 2a shows a cross-section view of an exemplary device (1) according to the invention.

In this example the device (1) comprises:
a) a first flexible multilayer film (3a) comprising a first polymer layer (4a), a second polymer layer (5a) and a metal layer (6a) arranged in between the first polymer layer (4a) and the second polymer layer (5a),
b) a second flexible multilayer film (3b) comprising a first polymer layer (4b), a second polymer layer (5b) and a metal layer (6b) arranged in between the first polymer layer (4b) and the second polymer layer (5b),

According to this example, the first flexible multilayer film (3a) and the second flexible multilayer film (3b) are partially joined to each another in joining regions (7) where their respective second polymer layer (5a) and (5b) have contact so that one conduit (10), where a cooling medium can flow, is formed between the joining regions (7). However, in further examples of this embodiment the device (1) can have more than one conduit (10) where a cooling medium can flow.

According to this example the device (1) also comprises an electrical insulation film (8) which is connected to both, the external surface of the first flexible multilayer film (3a) and the external surface of the second flexible multilayer film (3b) so that it covers a section (S1) of the edge (ED) of the device (1), so that the device (1) is electrically insulated on this section (S1) of the edge (ED) covered by the electrical insulation film (8).

Figure 2b shows a cross-section view of a further exemplary device (1) according to the invention.

In this second example, the edge (ED) of all the perimeter (P) of the device (1) is covered by the more than one electrical insulation films (8). In this way the device (1) is electrically insulated by said electrical insulation films (8) in all its perimeter (P).

Figure 2c shows a cross-section view of a further exemplary device (1) according to the invention.

In this third example, and in a step previous to the step of partially join the first flexible multilayer film (3a) and the second flexible multilayer film (3b) to each another in joining regions (7) where their respective second polymer layer (5a) and (5b) have contact so that one conduit (10), where a cooling medium can flow, is formed between the joining regions (7):
a) a first electrical insulation film (8c) is connected to the external surface and to the internal surface of the first flexible multilayer film (3a), so that it covers a section (S3a') of the edge (ED3a) of the first flexible multilayer film (3a), electrically insulating said edge (ED3a),
   and
b) a second electrical insulation film (8d) is connected to the external surface and to the internal surface of the second flexible multilayer film (3b), so that it covers a section (S3b') of the edge (ED3b) of the second flexible multilayer film (3b), electrically insulating said edge (ED3b),

So that, when both the first flexible multilayer film (3a) and the second flexible multilayer film (3b) are partially joined to each another in the joining regions (7) to form the device (1) according to the invention, said device (1) is electrically insulated by the films (8c, 8d).

The at least one electrical insulation film (8, 8c, 8d) is generally connected to the external surface of the first flexible multilayer film (3a) and the external surface of the second flexible multilayer film (3b) by means of an adhesive or by welding, coating, painting, overmolding or tapering process or by melting said at least one electrical insulation film (8, 8c, 8d) on the external surface of the first flexible multilayer film (3a) and the external surface of the second flexible multilayer film (3b). However, other processes of connection/application of the electrical insulation films (8, 8c, 8d) can be used.

An adhesive can be a hot-melt adhesive, a UV-curing adhesive or any other adhesive capable of connecting the films.

The electrical insulation film (8, 8c, 8d) can also be a frame made of an electrical insulation material connected to the external surface of the first flexible multilayer film (3a) and the external surface of the second flexible multilayer film (3b), for example, by fastening or clamping.

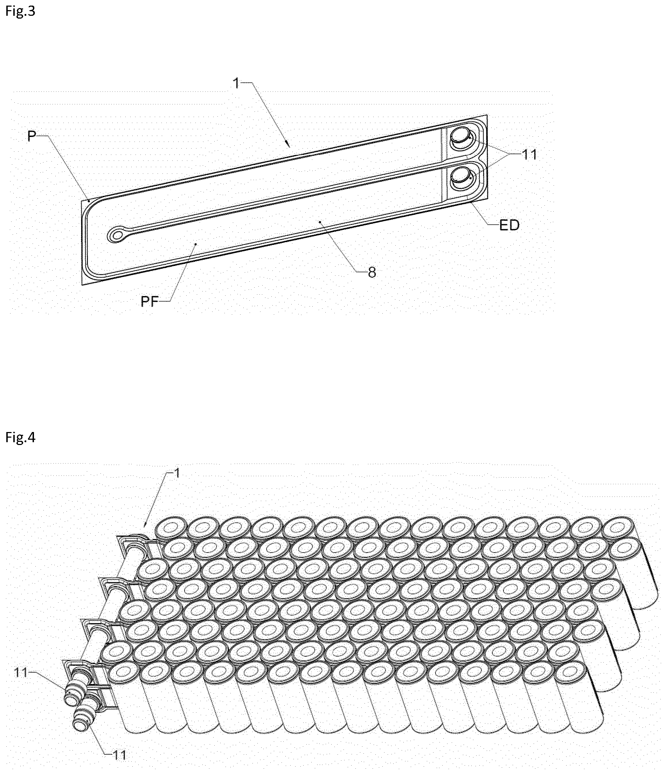

Figure 3 shows a third example of the device (1) according to the invention, wherein the electrical insulation film (8) is a pouch-type film (PF) in which the device (1) has been introduced so that the pouch-type film (PF) covers the device (1) and the edges (ED) of the perimeter (P) of the device (1). In this example the pouch-type film (PF) is fixed to the device (1) by connecting the edges of the pouch-type film (PF) to the edge (ED) of all the perimeter (P) of the device (1), so that it is covered by the electrical insulation film (8). In this way the device (1) is electrically insulated by said electrical insulation film (8) in all its perimeter (P). In the case the device has cut or punch out areas or sections on the surface of the first flexible multilayer film (3a) and/or on the surface of the second flexible multilayer film (3b) said cut or punch out areas or sections are then electrically insulated by the pouch-type film (PF).

The edges of the pouch-type film (PF) are generally connected to the edge (ED) of all the perimeter (P) of the device (1) by means of an adhesive or by welding, or tapering process. However, other processes for connecting the edges of the pouch-type film (PF) to the edge (ED) of the perimeter (P) of the device (1), can be used. For example, the edges of the pouch-type film (PF) can also be connected to the edge (ED) of the perimeter (P) of the device (1) by attaching or fastening or clamping them with the aid of peripheral equipment, for example a cell holder or a frame, like for example a plastic frame.

Figure 4 shows an example of the device (1) according to the invention having fittings (11) and located in between the batteries (12).

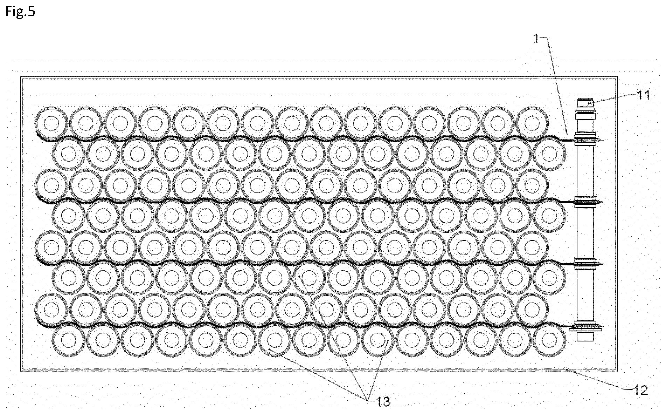

Figure 5 shows a battery pack (12) comprising a device (1) according to the invention located in between the batteries (12).

Generally, the at least one electrical insulation film (8, 8a, 8b, 8a-1, 8a-2, 8b-1, 8b-2, PF) is made of or comprises a layer made of an electrical insulation polymer material. Examples of electrical insulation polymer material are polypropylene, polyethylene, polyethylene terephthalate or mixtures thereof.

The electrical insulation film (8, 8a, 8b, 8a-1, 8a-2, 8b-1, 8b-2, PF) can be a multilayer film comprising an internal electrical insulation polymer material layer (9a) and an external electrical insulation polymer material layer (9b) arranged one on the top of the other, wherein the electrical insulation polymer material of the layer (9a) differs from the electrical insulation polymer material of the layer (9b).

The electrical insulation polymer material of the layer (9a) can be a polypropylene material, a polyethylene material, or a mixture thereof, and the electrical insulation polymer material of the layer (9b) can be a polyethylene terephthalate material. However, other materials with electrically insulation properties can be used and mixtures of said materials can be used.

The electrical insulation polymer material of the layer (9b) being a polyethylene terephthalate material is advantageous because it provides high strength, abrasion resistance and electrical insulation properties to the electrical insulation film (8, 8a, 8b, 8a-1, 8a-2, 8b-1, 8b-2, PF).

The electrical insulation polymer material of the layer (9a) being a polypropylene material, a polyethylene material, or a mixture thereof, is advantageous because it provides flexibility, softness, good thermal conductivity and electrical insulation properties to the electrical insulation film (8, 8a, 8b, 8a-1, 8a-2, 8b-1, 8b-2, PF).

The electrical insulation film (8, 8a, 8b, 8a-1, 8a-2, 8b-1, 8b-2, PF) can be a multilayer film comprising more than two layers, wherein said layers can comprise one or more of the layers (9a) or (9b). Therefore, several combinations of layers comprised in the electrical insulation film (8, 8a, 8b, 8a-1, 8a-2, 8b-1, 8b-2, PF) are possible.

The metal layer (6a, 6b) can be made of metal or comprises metal. Examples of metal are copper, copper alloy, aluminum, aluminum alloy.

The device (1) according to the invention can comprise fittings for the inlet and/or outlet of the cooling medium flowing in the at least one conduit (10) of the device (1). Generally, the fittings are made of plastic or metal.

The device (1) according to the invention can have one or more conduits (10), formed between the joining regions (7) where the second polymer layer (5a) and (5b) have contact, where a cooling medium can flow.

A cooling medium can be any type of liquid or gas that is capable of exchanging heat to or from a surface. This means that the cooling medium can cool the surface or heat the surface, depending on the specific application of the heat controlling device (1). The cooling medium can be a liquid or a gas or a mixture thereof. Examples of cooling medium are glycol- based fluid, like for example ethylene glycol; water, air, oil, or mixture of ethylene glycol and water.

### List of reference numbers

- (1): Device for cooling or controlling the temperature of a battery pack.
- (ED): Edge of the device (1).
- (ED-1) film (3a).: Edge of the sections (S3a-1) and (S3a-2) of the first flexible multilayer
- (ED-2) layer film (3b).: Edge of the sections (S3b-1) and (S3b-2) of the second flexible multi-
- (P): Perimeter of the device (1).
- (S1): Section of the edge (ED) of the device (1).
- (3a): First flexible multilayer film.
- (3b): Second flexible multilayer film.
- (S3a): Section of the first flexible multilayer film (3a).
- (S3b): Section of the second flexible multilayer film (3b).
- (S3a-1): External section of the first flexible multilayer film (3a).
- (S3a-2): Internal section of the first flexible multilayer film (3a).
- (S3b-1): External section of the first flexible multilayer film (3b).
- (S3b-2): Internal section of the first flexible multilayer film (3b).

- (S3a'): Section of the edge (ED3a).
- (S3b'): Section of the edge (ED3b).
- (ED3a): Edge of the first flexible multilayer film (3a).
- (ED3b): Edge of the second flexible multilayer film (3b).
- (ED8a-1): Edge of the electrical insulation film (8a-1)
- (ED8a-2): Edge of the electrical insulation film (8a-2)
- (ED8b-1): Edge of the electrical insulation film (8b-1)
- (ED8b-2): Edge of the electrical insulation film (8b-2)
- (4a): First polymer layer of the first flexible multilayer film (3a).
- (4b): First polymer layer of the second flexible multilayer film (3b).
- (5a): Second polymer layer of the first flexible multilayer film (3a).
- (5b): Second polymer layer of the second flexible multilayer film (3b).
- (6a): Metal layer of the first flexible multilayer film (3a).
- (6b): Metal layer of the second flexible multilayer film (3b).
- (7): Joining region where the second polymer layer (5a) and second polymer layer (5b) have contact.
- (8, 8a, 8b): Electrical insulation film.
- (8c, 8d): Electrical insulation film.
- (8a-1, 8a-2): Electrical insulation film.
- (8b-1, 8b-2): Electrical insulation film.
- (ED8a): Edge of electrical insulation film (8a)
- (ED8b): Edge of electrical insulation film (8b)
- (9a): Internal electrical insulation polymer material layer.
- (9b): External electrical insulation polymer material layer.
- (10): Conduit.
- (PF): Pouch film of electrical insulation film
- (11): Fitting.
- (12): Battery pack.
- (13): Battery.

## Claims

1. A device (1) for cooling or controlling the temperature of a battery pack comprising a first flexible multilayer film (3a) and a second flexible multilayer film (3b), wherein the device (1) also comprises at last one electrical insulation film (8, 8a, 8b, 8a-1, 8a-2, 8b-1, 8b-2, PF) covering at least on section of the edge (ED) of the device (1), so that the device (1) is electrically insulated by said at least one electrical insulation film (8, 8a, 8b, 8a-1, 8a-2, 8b-1, 8b-2, PF).

2. A device (1) according to claim 1, wherein:
a) the first flexible multilayer film (3a) comprises a first polymer layer (4a), a second polymer layer (5a) and a metal layer (6a) arranged in between the first polymer layer (4a) and the second polymer layer (5a),
b) the second flexible multilayer film (3b) comprises a first polymer layer (4b), a second polymer layer (5b) and a metal layer (6b) arranged in between the first polymer layer (4b) and the second polymer layer (5b),
wherein the first flexible multilayer film (3a) and the second flexible multilayer film (3b) are partially joined to each another in joining regions (7) where their respective second polymer layer (5a) and (5b) have contact so that at least one conduit (10), where a cooling medium can flow, is formed between the joining regions (7),
wherein the device (1) also comprises one electrical insulation film (8a) covering at least one section (S3a) of the first flexible multilayer film (3a) and one electrical insulation film (8b) covering at least one section (S3b) of the second flexible multilayer film (3b), both electrical insulation films (8a) and (8b) being placed so that they face each other and then being connected on their edges (ED8a) and (ED8b) so that they cover the edge (ED) of the device (1) in the at least one sections (S3a) and (S3b) so that the device (1) is electrically insulated by said electrical insulation films (8a, 8b).

3. The device (1) according to claim 2, wherein the electrical insulation film (8a) covers all the surface of the first flexible multilayer film (3a) and the electrical insulation film (8b) covers all the surface of the second flexible multilayer film (3b), both electrical insulation films (8a) and (8b) being placed so that they face each other and then being connected on their edges (ED8a) and (ED8b) so that they cover the edge (ED) of all the perimeter (P) of the device (1), so that the device (1) is electrically insulated by said electrical insulation films (8a, 8b).

4. A device (1) according to claim 1, wherein:
a) the first flexible multilayer film (3a) comprises a first polymer layer (4a), a second polymer layer (5a) and a metal layer (6a) arranged in between the first polymer layer (4a) and the second polymer layer (5a),
b) the second flexible multilayer film (3b) comprises a first polymer layer (4b), a second polymer layer (5b) and a metal layer (6b) arranged in between the first polymer layer (4b) and the second polymer layer (5b),
wherein the first flexible multilayer film (3a) and the second flexible multilayer film (3b) are partially joined to each another in joining regions (7) where their respective second polymer layer (5a) and (5b) have contact so that at least one conduit (10), where a cooling medium can flow, is formed between the joining regions (7),
wherein the device (1) also comprises at least one electrical insulation film (8) which is connected to both, the external surface of the first flexible multilayer film (3a) and the external surface of the second flexible multilayer film (3b) so that it covers one section (S1) of the edge (ED) of the device (1), so that the device (1) is electrically insulated on this section (S1) of the edge (ED) covered by the electrical insulation film (8).

5. The device (1) according to claim 5, wherein the at least one electrical insulation film (8) covers all the edge (ED) of all the perimeter (P) of the device (1).

6. The device (1) according to claim 5, comprising:
c) a first electrical insulation film (8c) which is connected to the external surface and to the internal surface of the first flexible multilayer film (3a), so that it covers a section (S3a') of the edge (ED3a) of the first flexible multilayer film (3a), electrically insulating said edge (ED3a),
and
d) a second electrical insulation film (8d) which is connected to the external surface and to the internal surface of the second flexible multilayer film (3b), so that it covers a section (S3b') of the edge (ED3b) of the second flexible multilayer film (3b), electrically insulating said edge (ED3b);
so that, when both the first flexible multilayer film (3a) and the second flexible multilayer film (3b) are partially joined to each another in the joining regions (7) to form the device (1) according to the invention, said device (1) is electrically insulated by the films (8c, 8d).

7. The device (1) according to claim 5, wherein, the at least one electrical insulation film (8) is a pouch-type film (PF) in which the device (1) is introduced so that the pouch-type film (PF) covers the device (1) and the edges (ED) of the perimeter (P) of the device (1).

8. The device (1) according to anyone of claims 1 to 7, wherein the at least one electrical insulation film (8, 8a, 8b, 8a-1, 8a-2, 8b-1, 8b-2, PF) is made of or comprises a layer made of a polypropylene material, a polyethylene material a polyethylene terephthalate material or mixtures thereof.

9. The device (1) according to anyone of claims 1 to 8, wherein the electrical insulation film (8, 8a, 8b, 8a-1, 8a-2, 8b-1, 8b-2, PF) is a multilayer film comprising an internal electrical insulation polymer material layer (9a) and an external electrical insulation polymer material layer (9b) arranged one on the top of the other, wherein, the electrical insulation polymer material of the layer (9a) differs from the electrical insulation polymer material of the layer (9b).

10. The device (1) according to claim 9, wherein:
a) the electrical insulation polymer material of the layer (9a) is a polypropylene material, a polyethylene material, or a mixture thereof,
and
b) the electrical insulation polymer material of the layer (9b) is a polyethylene terephthalate material.

11. The device (1) according to anyone o claims 1 t 10, wherein the metal layer (6a, 6b) is made of copper, copper alloy, aluminum or aluminum alloy.

12. The device (1) according to anyone of claim 1 to 11 comprising fittings for the inlet and/or outlet of the cooling medium flowing in the at least one conduit (10) of the device (1).

13. The device (1) according to anyone of claims 1 to 12, wherein the cooling medium is a glycol-based fluid, ethylene glycol, water, air, or mixture of ethylene glycol and water.

14. A battery pack comprising several batteries for storing electrical energy and comprising the device (1) according to anyone of claims 1 to 13.

15. A vehicle comprising the device (1) according to claims 1 to 13 or the battery pack according to claim 14.
